# EUROPEAN PATENT APPLICATION

(11) **EP 4 841 438 A1**
(43) Date of publication of application: **18.11.2026**
(21) Application number: 25738355.4
(22) Date of filing: 06.01.2025
(51) Int. Cl.: G06F 9/451

(54) **INTERACTION METHOD AND APPARATUS, AND DEVICE AND STORAGE MEDIUM**

(30) Priority: 08.01.2024 CN 202410031127
(71) Applicant: Beijing Zitiao Network Technology Co., Ltd., Beijing 100190 (CN)
(72) Inventor: LUO, Manjun, Beijing 100028 (CN); WANG, Qingyu, Beijing 100028 (CN); FANG, Angxiang, Beijing 100028 (CN); TANG, Liwei, Beijing 100028 (CN); LI, Qiuting, Beijing 100028 (CN); ZHANG, Wen, Beijing 100028 (CN); ZHU, Yuan, Beijing 100028 (CN); CHU, Ke, Beijing 100028 (CN); LIN, Wenfeng, Beijing 100028 (CN); ZHANG, Yichen, Beijing 100028 (CN); JI, Xinyu, Beijing 100028 (CN)
(74) Representative: Marks & Clerk LLP
(86) International application number: PCT/CN2025/070715
(87) International publication number: WO 2025/148824

(57) **Abstract**

Embodiments of the disclosure relate to a method, an apparatus, a device, and a storage medium for interaction. The method proposed herein includes: displaying, in an input field, a plurality of interactive elements input by a user; providing at least one candidate interactive element, the at least one candidate interactive element being determined based on a set of interactive elements of the plurality of interactive elements, and the set of interactive elements including at least an expression element; and replacing, based on a selection of a target interactive element from the at least one candidate interactive element, the set of interactive elements of the plurality of interactive elements with the target interactive element. In this way, the embodiments of the present disclosure can support the user to obtain a fused interactive element by combining a plurality of interactive elements, thereby enriching the interactive elements available to the user.

## Description

The present application claims priority to Chinese Patent Application No. 202410031127.3, filed on January 08, 2024, and entitled "INTERACTION METHOD, APPARATUS, DEVICE, AND STORAGE MEDIUM", which is hereby incorporated by reference in its entirety.

### TECHNICAL FIELD

Example embodiments of the present disclosure generally relate to the field of computers, and in particular, to a method, an apparatus, a device, and a computer-readable storage medium for interaction.

### BACKGROUND

With the development of computer technologies, the Internet has become an important platform for people to perform information interaction. In the process of information interaction through the Internet, various types of interactive elements (e.g., emoticons, etc.) have become an important medium for people to perform social expression and information exchange. People expect to be able to use more diverse forms of interactive elements in the interaction process.

### SUMMARY

In a first aspect of the present disclosure, a method of interaction is provided. The method includes: displaying, in an input field, a plurality of interactive elements input by a user; providing at least one candidate interactive element, the at least one candidate interactive element being determined based on a set of interactive elements of the plurality of interactive elements, and the set of interactive elements including at least an expression element; and replacing, based on a selection of a target interactive element from the at least one candidate interactive element, the set of interactive elements of the plurality of interactive elements with the target interactive element.

In a second aspect of the present disclosure, a method of interaction is provided. The method includes: presenting an editing window based on a first selection of a first interactive element; presenting the selected first interactive element in the editing window; and presenting a fused interactive element in the editing window based on a second selection of at least one second interactive element, the fused interactive element being determined based on the first interactive element and the at least one second interactive element.

In a third aspect of the present disclosure, an interaction apparatus is provided. The apparatus includes: a displaying module configured to display, in an input field, a plurality of interactive elements input by a user; a providing module configured to provide at least one candidate interactive element, the at least one candidate interactive element being determined based on a set of interactive elements of the plurality of interactive elements; and a replacing module configured to replace, based on a selection of a target interactive element from the at least one candidate interactive element, the set of interactive elements of the plurality of interactive elements with the target interactive element.

In a fourth aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect or the second aspect.

In a fifth aspect of the present disclosure, a computer-readable storage medium is provided. The computer-readable storage medium has a computer program stored thereon, and the computer program is executable by a processor to implement the method of the first aspect or the second aspect.

It would be appreciated that the content described in this summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 illustrates a schematic diagram of an example environment in which the embodiments according to the present disclosure may be implemented;
FIGS. 2A to 2D illustrate example interfaces according to some embodiments of the present disclosure;
FIGS. 3A to 3B illustrate example interfaces according to some embodiments of the present disclosure;
FIGS. 4A to 4D illustrate example interfaces according to some embodiments of the present disclosure;
FIG. 5 illustrates a flowchart of an example process of interaction according to some embodiments of the present disclosure;
FIG. 6 illustrates a flowchart of an example process of interaction according to some embodiments of the present disclosure;
FIG. 7 illustrates a schematic structural block diagram of an example apparatus for interaction according to some embodiments of the present disclosure; and
FIG. 8 illustrates a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it would be appreciated that the present disclosure may be implemented in various forms and should not be construed as being limited to the embodiments set forth herein. Instead, these embodiments are provided for a more thorough and complete understanding of the present disclosure. It would be appreciated that the drawings and embodiments of the present disclosure are only used for illustrative purposes, and are not used to limit the scope of protection of the present disclosure.

It should be noted that the title of any section/sub-section provided herein is not restrictive. Various embodiments are described throughout this text, and any type of embodiment may be included under any section/sub-section. In addition, the embodiments described in any section/sub-section may be combined with any other embodiments described in the same section/sub-section and/or different section/sub-section in any manner.

In the description of the embodiments of the present disclosure, the term "include/comprise" and similar terms thereto should be understood as open-ended inclusions, that is, "include/comprise but is not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user's data, acquisition and/or use of data, etc. These aspects all comply with corresponding laws, regulations and related provisions. In the embodiments of the present disclosure, all data collection, acquisition, processing, handling, forwarding, use, etc. are carried out on the premise of awareness and confirmation from the user. Accordingly, when implementing various embodiments of the present disclosure, the user should be informed of the type, range of use, use scenarios, etc. of data or information that may be involved, and the authorization thereof should be obtained from the user through appropriate means in accordance with relevant laws and regulations. The specific manner of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, obtaining the consent of the personal information subject, or being necessary for performing a contract, etc.), and the processing will only be carried out within the scope of provisions or agreements. If the user refuses to process personal information other than the necessary information required for the basic functions, it will not affect the user's use of the basic functions.

In the process of people interacting information through the Internet, interactive elements such as expressions are important carriers for people to exchange information. However, in the traditional interaction process, it is difficult for people to participate in the production process of interactive elements, making the interactive elements that may be used relatively limited.

Embodiments of the present disclosure propose an interaction solution. According to this solution, a plurality of interactive elements input by a user may be displayed in an input field. Further, at least one candidate interactive element may be provided, the at least one candidate interactive element is determined based on a set of interactive elements of the plurality of interactive elements, and the set of interactive elements including at least an expression element. Accordingly, based on a selection of a target interactive element from the at least one candidate interactive element, the set of interactive elements of the plurality of interactive elements may be replaced with the target interactive element.

In this way, the embodiments of the present disclosure can support the user in obtaining a fused interactive element by combining a plurality of interactive elements, thereby enriching the interactive elements available to the user.

Various example implementations of this solution will be described in detail below in further conjunction with the drawings.

### Example Environment

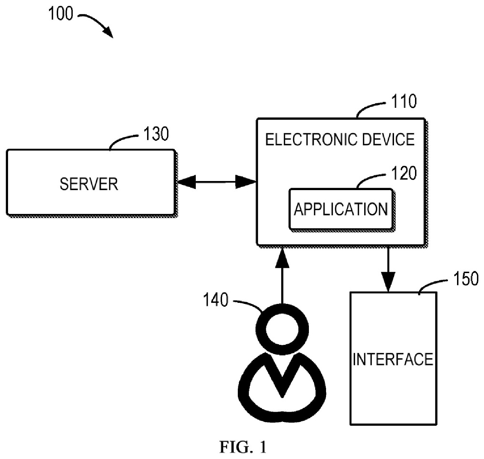

FIG. 1 illustrates a schematic diagram of an example environment 100 in which the embodiments of the present disclosure may be implemented. As shown in FIG. 1, the example environment 100 may include an electronic device 110.

In this example environment 100, the electronic device 110 may run an application 120 that supports interface interaction. The application 120 may be any appropriate type of application for interface interaction, examples of which may include but are not limited to: a video application, a social application, or other appropriate applications. A user 140 may interact with the application 120 via the electronic device 110 and/or its attached device.

In the environment 100 of FIG. 1, if the application 120 is active, the electronic device 110 may present an interface 150 for supporting the interface interaction through the application 120.

In some embodiments, the electronic device 110 communicates with a server 130 to implement the provision of the services of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the electronic device 110 may also support any type of user-specific interface (such as "wearable" circuitry, etc.).

The server 130 may be an independent physical server, a server cluster or distributed system composed of multiple physical servers, or may provide cloud services, cloud databases, cloud computing, cloud functions, cloud storage, network services, cloud communications, middleware services, domain name services, security services, content delivery networks, and cloud servers for basic cloud computing services such as big data and artificial intelligence platforms. The server 130 may include, for example, a computing system/server, such as a mainframe, an edge computing node, a computing device in a cloud environment, and the like. The server 130 may provide background services for the application 120 supporting a virtual scene in the electronic device 110.

A communication connection may be established between the server 130 and the electronic device 110. The communication connection may be established by wired or wireless means. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It would be appreciated that the structures and functions of the elements in the environment 100 are described for illustrative purposes only, without implying any limitation to the scope of the present disclosure.

Some example embodiments of the present disclosure will be described below with continued reference to the drawings.

### Example Interaction

An example process of interaction according to the embodiments of the present disclosure will be described below with reference to the drawings.

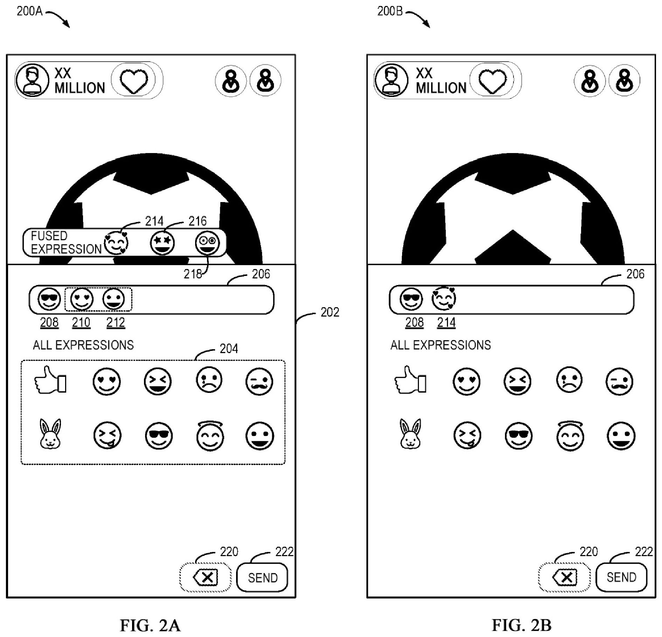

FIGS. 2A to 2D illustrate example interfaces 200A to 200D according to some embodiments of the present disclosure. The interfaces 200A to 200D may be provided by the electronic device 110 shown in FIG. 1.

The following specific embodiments will describe an example process of the present disclosure by using an expression element as an example of an interactive element. Such an expression element may include, for example, but is not limited to: an image expression, a speech expression, a text emoticon, etc. In addition to the expression element, such an interactive element may also include, for example, a character element, an audio element, an image element, etc.

As shown in FIG. 2A, in the interface 200, the electronic device 110 may provide an input field 206. In some examples, the input field 206 may be any appropriate type of control for inputting information. The input field 206 may be provided by an appropriate application, such as an input method or a currently activated application.

As shown in the figure, the electronic device 110 may display an expression panel 202, for example. The expression panel 202 may provide, for example, an expression set 204 that is available to a current user. As an example, the expression set 204 may include expressions that have been added by the user or default expressions of the application, such as emoji expressions.

As shown in FIG. 2A, the electronic device 110 may receive a user's selection of an expression from the expression set 204, and may display a corresponding expression in the input field 206 accordingly. For example, the electronic device 110 may display a plurality of expressions input by the user via the expression set 204, that is, an expression 208, an expression 210, and an expression 212.

In some embodiments, the electronic device 110 may display at least one candidate expression. In some examples, the candidate expression is also referred to as a "fused expression", which may be determined by combining a plurality of corresponding expressions, such as a fused expression 214, a fused expression 216, and a fused expression 218. As an example, such fused expressions 214 to 218 may be determined based on a plurality of expressions (for example, the expression 210 and the expression 212) of expressions input by the user.

In some embodiments, a model may be used to generate a fused expression corresponding to the plurality of expressions. For example, the electronic device 110 and/or the server 130 may provide expressions to be combined, such as the expression 210 and the expression 212, to the model.

Further, the electronic device 110 and/or the server 130 may obtain a new fused expression (for example, the fused expression 214) generated by the model based on the expression 210 and the expression 212.

In some embodiments, the electronic device 110 and/or the server 130 may further instruct the model to fuse the plurality of expressions to be combined according to a specific mode. For example, the model may be instructed to generate a new fused expression by combining visual information of the plurality of expressions. For example, the model may be instructed to generate a new fused expression by combining visual content of the expression 210 and visual content of the expression 212.

As an example, the model may be instructed to generate a new fused expression by fusing semantic information of expressions. For example, the model may be instructed to adjust visual content of the expression 210 according to speech information of the expression 212, so that the new fused expression may reflect semantic information of both the expression 210 and the expression 212.

In some embodiments, the electronic device 110 and/or the server 130 may generate one or more fused expressions for a specific expression combination. For example, the fused expression 214 to the fused expression 218 may be generated based on the same expression combination (for example, the expression 210 and the expression 212).

In some embodiments, the fused expression 214 to the fused expression 218 may be generated in real time based on the expression 210 and the expression 212. Alternatively, the electronic device 110 and/or the server 130 may pre-build a fused expression library corresponding to various expression combinations, and may determine one or more fused expressions (for example, the fused expression 214 to the fused expression 218) corresponding to a current expression combination from the fused expression library.

In some examples, the expression combination may consider, for example, an order in which the expressions are input. For example, a fused expression obtained from "the expression 210 and the expression 212" may be different from a fused expression obtained from "the expression 212 and the expression 210". Alternatively, it is also possible to consider only types of the expressions to be combined, regardless of the order in which they are input.

In some embodiments, the fused expression 214 to the fused expression 218 may also be expressions produced by a designer, for example.

In some embodiments, the electronic device 110 may determine the expression 210 and the expression 212 to be combined from input content in the input field 206. In some embodiments, if the last input content is expressions, the electronic device 110 may determine the expression 210 and the expression 212 to be combined according to an input order of expressions in the input content. For example, the electronic device 110 may determine the last two consecutive expressions or the last three consecutive expressions in the input content as the expressions to be combined.

In some embodiments, the electronic device 110 may also detect combinable consecutive expressions from the input content, regardless of whether such expressions are at the end of the input content. Taking FIG. 2A as an example, the electronic device 110 provides a set of fused expressions determined based on the expression 208 and the expression 210 when it is determined that the expression 208 and the expression 210 are combinable.

In some embodiments, the electronic device 110 may further determine the expressions to be combined based on a user operation. For example, the electronic device 110 may receive the user's selection of the expression 210 and the expression 212, thereby determining that the expressions to be combined include the expression 210 and the expression 212.

In some embodiments, the electronic device 110 may further update the provided fused expression in real time according to a change of the input content in the input field 206. For example, if the newly input content is a character, the electronic device 110 may cease providing the fused expression. As another example, upon receiving an input of a new expression, the electronic device 110 may further provide a fused expression corresponding to a new expression combination.

For example, if the user inputs the expression 208 and the expression 210, the electronic device 110 may provide a set of fused expressions determined based on the expression 208 and the expression 210. Further, if the user further inputs the expression 212, the electronic device 110 may provide a set of fused expressions determined based on the expression 210 and the expression 212.

As another example, if the user deletes the expression 212 through, for example, a deletion control 220, the electronic device 110 may re-provide a set of fused expressions determined based on the expression 208 and the expression 210.

In some embodiments, in order to improve the efficiency of the user using fused expressions, the electronic device 110 may further display prompt information based on the expressions that have been input by the user, for example, to help the user understand which expressions may be combined with the input expressions to obtain a fused expression. For example, if the user inputs the expression 210, the electronic device 110 may prompt that the expression 212 may be combined with the expression 210 to obtain a corresponding fused expression.

In some embodiments, the electronic device 110 may further receive the user's selection of the provided fused expression, and may replace a plurality of corresponding expressions in the input field 206 based on the fused expression selected by the user. For example, taking FIG. 2A and FIG. 2B as examples, if the user selects the fused expression 214, the electronic device 110 may use the fused expression 214 to replace the expression 210 and the expression 212 in the input field 206.

Based on this approach, the embodiments of the present disclosure can support the user in combining existing expressions to obtain new expressions, thereby enriching the expressions available to the user and improving the experience of expression interaction.

In some embodiments, the electronic device 110 may further support, for example, a further combination for the fused expression 214. For example, if the electronic device 110 determines that the expression 208 may be further combined with the fused expression 214, the electronic device 110 may further provide a set of new fused expressions determined based on the expression 208 and the fused expression 214.

In some embodiments, the electronic device 110 may further send the obtained fused expression 214. As an example, upon receiving a selection of a sending entry 222, the electronic device 110 may send a message generated based on the fused expression 214. Taking FIG. 2B as an example, the message may include, for example, the expression 208 and the fused expression 214.

In some embodiments, such a message may be sent to any appropriate application or service. For example, such a message may be input into any appropriate application or service such as a local document, an online document, an instant messaging service, a comment service, a private message service, etc.

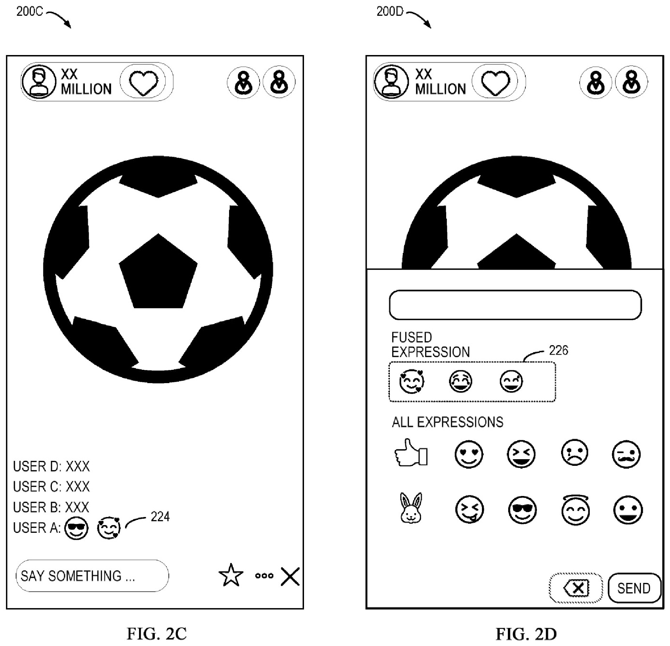

In some embodiments, taking FIG. 2C as an example, the message 224 may be sent to a live streaming interface as a comment message.

In some embodiments, as shown in FIG. 2D, the electronic device 110 may further update a historical expression list 226 based on the user's selection of the fused expression 214. The historical expression list 226 may display a set of historical fused expressions used by the user, each historical fused expression may be determined based on a plurality of corresponding expressions.

For example, after the fused expression 214 is selected, the fused expression 214 may be added to the historical expression list 226. In some embodiments, the historical expression list 226 may maintain a predetermined number of fused expressions. When the number of historical fused expressions used by the user exceeds the predetermined number, the electronic device 110 may replace, for example, the earliest used fused expression in the list with a newly used fused expression.

In some embodiments, the historical expression list 226 may be displayed, for example, in an expression panel, and may be sorted, for example, according to the order of use of the fused expressions.

Based on this approach, the embodiments of the present disclosure can facilitate the user to conveniently input fused expressions.

Although the above refers to obtaining a fused expression based on a plurality of expressions, it would be appreciated that the embodiments of the present disclosure may also support the fusion of other types of interactive elements. Such interactive elements may further include character elements, audio elements, image elements, etc., so that the fusion of expression elements and other types of interactive elements may be supported.

For example, the electronic device 110 may obtain a corresponding fused interactive element (such as an expression element, a character element, an audio element, an image element, etc.) based on the input characters and expressions. For example, the user may input a character "cry", and further input a laugh expression. For example, the fusion may be carried out based on semantic information of the character and semantic information and/or visual information of the expression, and for example, a fused expression of "neither laughing nor crying" may be obtained.

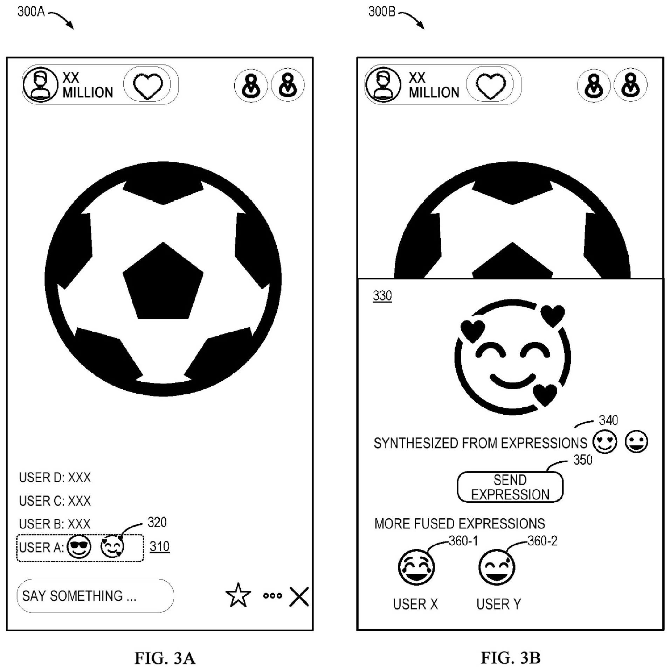

The example process of interaction will be further described below with reference to FIG. 3A and FIG. 3B. FIG. 3A to FIG. 3B illustrate example interfaces 300A and 300B according to some embodiments of the present disclosure. The interface 300A and the interface 300B may be provided by the electronic device 110 shown in FIG. 1.

As shown in FIG. 3A, the interface 300A may correspond to, for example, the interface to which the message discussed above is sent, such as the live streaming interface. It would be appreciated that the interface 300A may correspond to a client of a user (for example, user A) who sends the message 310, or may correspond to clients of other users, for example, other users in the live streaming room.

As shown in FIG. 3A, the message 310 may be generated and sent based on the process discussed above, and the message 310 may include a fused expression 320. Further, upon receiving a selection of the fused expression 320, the electronic device 110 may display a window 330 shown in FIG. 3B.

As shown in FIG. 3B, the electronic device 110 may display target information 340 in the window 330 to indicate that the fused expression 320 is determined based on the two expressions as shown. Further, the electronic device 110 may further provide a sending entry 350 for sending the fused expression 320, and may input the fused expression 340 in a corresponding input component (for example, a comment input component in a live streaming room) based on a selection of the sending entry 350.

In addition, as shown in FIG. 3B, the electronic device 110 may further display one or more other fused expressions in the window 330, such as a fused expression 360-1 and a fused expression 360-2. Such fused expressions 360-1 and 360-2 may be generated or shared by other users, for example. Illustratively, the electronic device 110 may further present corresponding user information in association with the fused expression 360-1 or the fused expression 360-2.

Further, the electronic device 110 may also quickly input by selecting the fused expression 360-1 or the fused expression 360-2, for example.

Based on this approach, the embodiments of the present disclosure may further allow other users to view and use such fused expressions, thereby improving the efficiency of expression interaction.

Similarly, other types of fused interactive elements may also support similar interaction processes, for example, to support the users in viewing the fusion process of such fused interactive elements, and may quickly share such fused interactive elements.

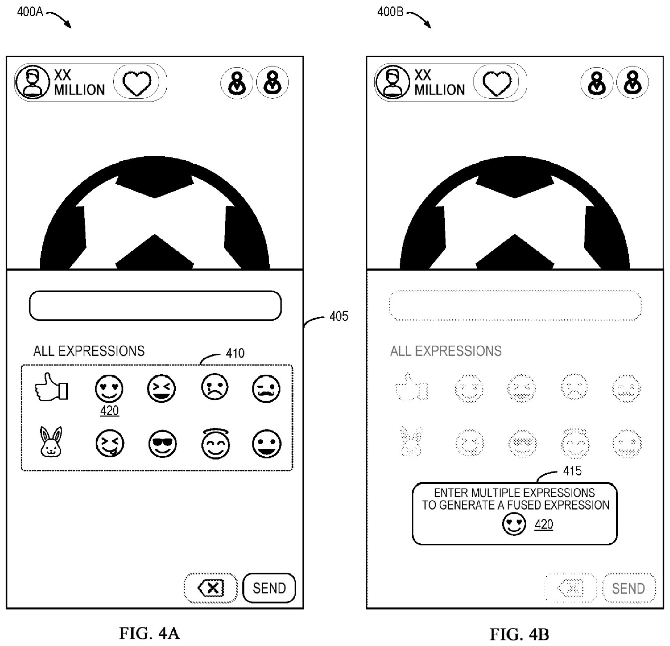

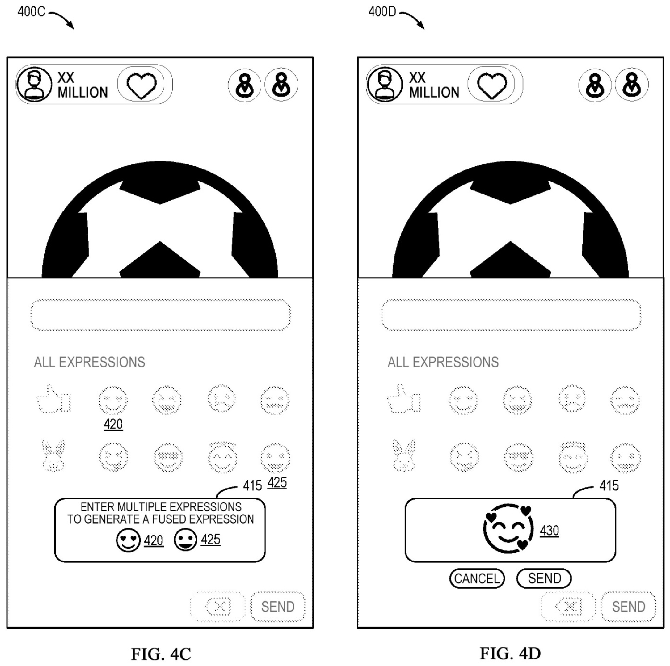

In some embodiments, the embodiments of the present disclosure may further support the user to obtain fused interactive elements in other appropriate manners. FIG. 4A to FIG. 4D illustrate example interfaces 400A to 400D according to some embodiments of the present disclosure. The interfaces 400A to 400D may be provided by the electronic device 110 shown in FIG. 1. The example process of interaction continues to be described by taking the expression element as an example of the interactive element.

As shown in FIG. 4A, the electronic device 110 may present an expression panel 405 in the interface 400A, and the expression panel 405 may include an expression set 410 available to the user.

Further, as shown in FIG. 4B, the electronic device 110 may receive an operation of the user on an expression 420, and may present an expression editing window 415. For example, the electronic device 110 may receive a long press operation of the user on the expression 420, and display the expression editing window 415 accordingly.

Further, the electronic device 110 may move the expression 420 from an initial position into the expression editing window 415 based on a drag-and-drop operation of the user on the expression 420. Accordingly, the electronic device 110 may display the selected expression 420 in the expression editing window.

Further, the electronic device 110 may further receive a user's selection of one or more other expressions, for example. For example, the electronic device 110 may receive an operation of the user dragging an expression 425 into the expression editing window 415, and may display the expression 425 in the expression editing window 415 accordingly, thereby displaying both the expression 420 and the expression 425.

In some embodiments, as shown in FIG. 4D, the electronic device 110 may display a fused expression 430 determined based on the expression 420 and the expression 425 in the expression editing window 415.

In some embodiments, the electronic device 110 may automatically display the fused expression 430 after a predetermined duration during which no further input from the user is received. As another example, the electronic device 110 may further provide the fused expression 430 determined based on a plurality of expressions added to the expression editing window 415 based on a request of the user.

In some examples, before the fused expression 430 is provided, the electronic device 110 may further receive the user's operation on other expressions, for example, and further add them to the expression editing window 415 to obtain a corresponding fused expression.

In some examples, the electronic device 110 may further support, for example, a further combination of the fused expression 430 with other expressions. For example, the electronic device 110 may support the user to operate other expressions to obtain a new fused expression corresponding to the fused expression 430 and the other selected expressions.

In some embodiments, as shown in FIG. 4D, the electronic device 110 may further provide a sending entry in association with the fused expression 430. Further, upon receiving a selection of the sending entry, the electronic device 110 may input the fused expression 430 into an associated target component, such as a comment input component. Alternatively, the electronic device 110 may also directly send the fused expression, for example, send the fused expression as a comment message to the live streaming interface.

Accordingly, the electronic device 110 may cease displaying the expression editing window 415 based on the selection of the sending entry or a cancel entry.

In some embodiments, the interactive elements for fusion may further include image elements, audio elements, character elements, etc. For example, the electronic device 110 may support the fusion between interactive elements of the same type, or may also support the fusion between interactive elements of different types. For example, the user may obtain a new expression or a new character by fusing an expression and one or more characters through dragging and dropping.

Based on this approach, the embodiments of the present disclosure can support a freer exploration of the fusion between interactive elements, thereby enhancing the interactive entertainment.

### Example Process

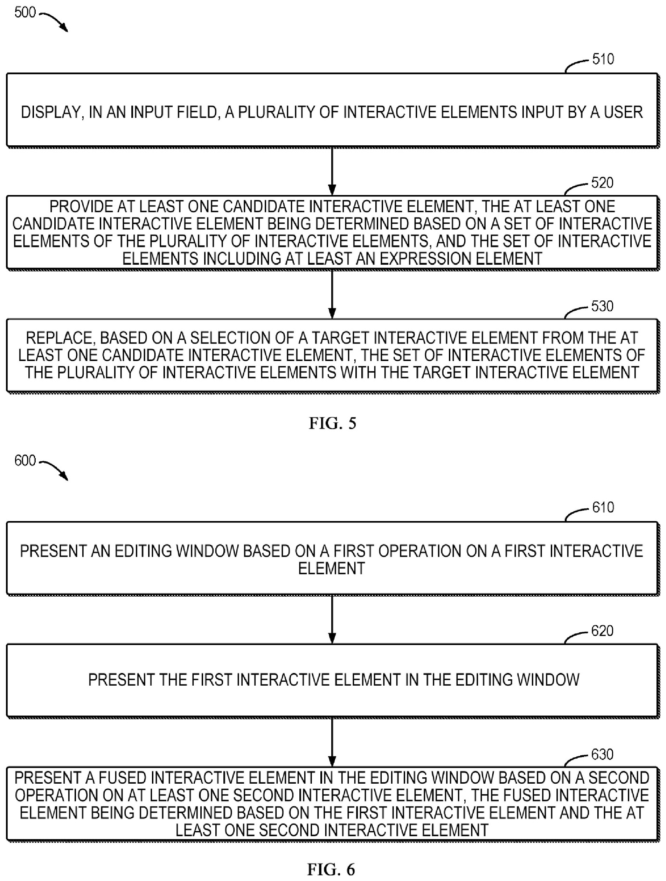

FIG. 5 illustrates a flowchart of an example process 500 of interaction according to some embodiments of the present disclosure. The process 500 may be implemented at the electronic device 110. The process 500 will be described below with reference to FIG. 1.

As shown in the figure, at block 510, the electronic device 110 displays, in an input field, a plurality of interactive elements input by a user.

At block 520, the electronic device 110 provides at least one candidate interactive element, the at least one candidate interactive element being determined based on a set of interactive elements of the plurality of interactive elements, and the set of interactive elements including at least an expression element.

At block 530, the electronic device 110 replaces, based on a selection of a target interactive element from the at least one candidate interactive element, the set of interactive elements of the plurality of interactive elements with the target interactive element.

In some embodiments, the set of interactive elements includes at least one of the following: a first set of interactive elements determined based on a display sequence of the plurality of interactive elements; a second set of interactive elements determined, among the plurality of interactive elements, as capable of being combined to generate a fused interactive element; a third set of interactive elements indicated by a user operation.

In some embodiments, the at least one candidate interactive element is generated based on: providing the set of interactive elements to a model; and obtaining a combined interactive element generated by the model based on the set of interactive elements, as the candidate interactive element.

In some embodiments, the model generates the combined interactive element based on visual information and/or semantic information of the set of interactive elements.

In some embodiments, the at least one candidate interactive element is a first set of candidate interactive elements, and the process 500 further includes: providing a second set of candidate interactive elements in response to the target interactive element being combinable with at least one other interactive element of the plurality of interactive elements after replacing, the second set of candidate interactive elements being determined based on the target interactive element and the at least one other interactive element.

In some embodiments, the process 500 further includes: sending a message generated based on the target interactive element.

In some embodiments, sending the message generated based on the target interactive element includes: sending, in a live streaming interface, a comment message generated based on the target interactive element.

In some embodiments, the message is displayed at a client of a target user, and the client is configured to: present target information based on a predetermined operation of the target user on the target interactive element in the message, the target information indicating that the target interactive element is determined based on the set of interactive elements.

In some embodiments, the client is further configured to: present a first sending entry; and enter the target interactive element in an input component of the client based on a selection of the first sending entry.

In some embodiments, the process 500 further includes: updating a historical interactive element list based on the selection of the target interactive element, the historical interactive element list including at least one historical fused interactive element used by a current user, where the at least one historical fused interactive element is determined based on a plurality of corresponding interactive elements.

In some embodiments, the process 500 further includes: displaying the historical interactive element list in an interactive element panel.

In some embodiments, the process 500 further includes: inputting, based on a selection of a target fused interactive element from the at least one historical fused interactive element, the target fused interactive element into the input field.

FIG. 6 illustrates a flowchart of an example process 600 of interaction according to some embodiments of the present disclosure. The process 600 may be implemented at the electronic device 110. The process 600 will be described below with reference to FIG. 1.

As shown in FIG. 6, at block 610, the electronic device 110 presents an editing window based on a first selection of a first interactive element.

At block 620, the electronic device 110 presents the selected first interactive element in the editing window.

At block 630, the electronic device 110 presents a fused interactive element in the editing window based on a second selection of at least one second interactive element, the fused interactive element being determined based on the first interactive element and the at least one second interactive element.

In some embodiments, the process 600 further includes: inputting the fused interactive element into a target component or sending the fused interactive element based on a selection of a second sending entry in the editing window.

In some embodiments, presenting the selected first interactive element in the editing window includes: presenting the selected first interactive element in the editing window in response to the first interactive element being moved from a first position to the editing window.

In some embodiments, the second selection includes: moving the at least one second interactive element from a second position into the editing window, to enable the editing window to display the first interactive element and the at least one second interactive element.

In some embodiments, the first interactive element, the second interactive element, or the fused interactive element includes at least one of the following: an expression element, a character element, an image element, an audio element.

### Example Apparatus and Device

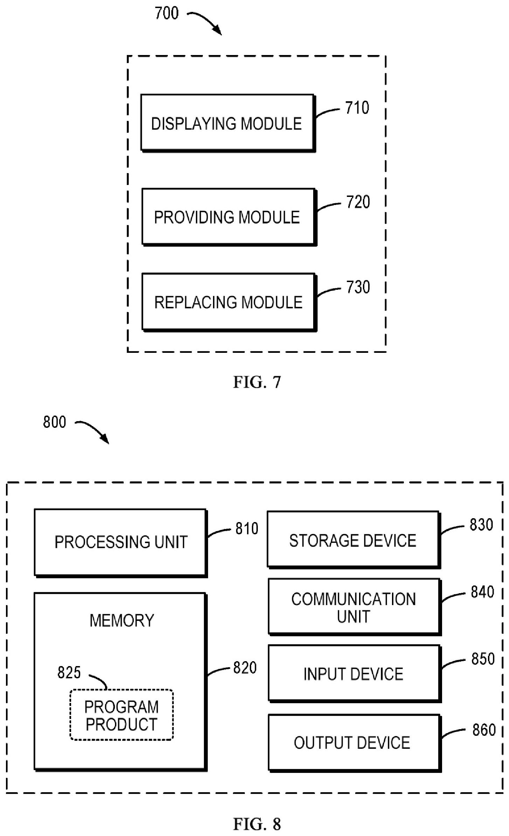

The embodiments of the present disclosure further provide a corresponding apparatus for implementing the above methods or processes. FIG. 7 illustrates a schematic structural block diagram of an example apparatus 700 for interaction according to some embodiments of the present disclosure. The apparatus 700 may be implemented as or included in the electronic device 110. Each module/component in the apparatus 700 may be implemented by hardware, software, firmware, or any combination thereof.

As shown in FIG. 7, the apparatus 700 includes a displaying module 710 configured to display, in an input field, a plurality of interactive elements input by a user; a providing module configured to provide at least one candidate interactive element, the at least one candidate interactive element being determined based on a set of interactive elements of the plurality of interactive elements, and the set of interactive elements including at least an expression element; and a replacing module 720 configured to replace, based on a selection of a target interactive element from the at least one candidate interactive element, the set of interactive elements of the plurality of interactive elements with the target interactive element.

In some embodiments, the set of interactive elements includes at least one of the following: a first set of interactive elements determined based on a display sequence of the plurality of interactive elements; a second set of interactive elements determined, among the plurality of interactive elements, as capable of being combined to generate a fused interactive element; a third set of interactive elements indicated by a user operation.

In some embodiments, the at least one candidate interactive element is generated based on: providing the set of interactive elements to a model; and obtaining a combined interactive element generated by the model based on the set of interactive elements, as the candidate interactive element.

In some embodiments, the model generates the combined interactive element based on visual information and/or semantic information of the set of interactive elements.

In some embodiments, the at least one candidate interactive element is a first set of candidate interactive elements, and the providing module 720 is further configured to: provide a second set of candidate interactive elements in response to the target interactive element being combinable with at least one other interactive element of the plurality of interactive elements after replacing, the second set of candidate interactive elements being generated based on the target interactive element and the at least one other interactive element.

In some embodiments, the apparatus 700 further includes a sending module configured to: send a message generated based on the target interactive element.

In some embodiments, the sending module is further configured to: send, in a live streaming interface, a comment message generated based on the target interactive element.

In some embodiments, the message is displayed at a client of a target user, and the client is configured to: present target information based on a predetermined operation of the target user on the target interactive element in the message, the target information indicating that the target interactive element is determined based on the set of interactive elements.

In some embodiments, the client is further configured to: present a first sending entry; and input the target interactive element in an input component of the client based on a selection of the first sending entry.

In some embodiments, the apparatus 700 further includes an updating module configured to: update a historical interactive element list based on the selection of the target interactive element, the historical interactive element list including at least one historical fused interactive element used by a current user, where the at least one historical fused interactive element is determined based on a plurality of corresponding interactive elements.

In some embodiments, the apparatus 700 further includes an interactive element viewing module configured to: display the historical interactive element list in an interactive element panel.

In some embodiments, the apparatus 700 further includes an interactive element inputting module configured to: input, based on a selection of a target fused interactive element from the at least one historical fused interactive element, the target fused interactive element into the input field.

FIG. 8 illustrates a block diagram of an electronic device 800 in which one or more embodiments of the present disclosure may be implemented. It would be appreciated that the electronic device 800 shown in FIG. 8 is only illustrative, and should not constitute any limitation on the functions and scope of the embodiments described herein. The electronic device 800 shown in FIG. 8 may be used to implement the electronic device 110 of FIG. 1.

As shown in FIG. 8, the electronic device 800 is in the form of a general electronic device. Components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and may perform various processing based on the programs stored in the memory 820. In a multi-processor system, a plurality of processing units executes computer executable instructions in parallel to improve the parallel processing capability of the electronic device 800.

The electronic device 800 generally includes a plurality of computer storage media. Such media may be any available media that are accessible to the electronic device 800, including but not limited to volatile and non-volatile media, removable and non-removable media. The memory 820 may be a volatile memory (for example, a register, cache, random access memory (RAM)), a non-volatile memory (such as a read-only memory (ROM), an electrically erasable programmable read-only memory (EEPROM), a flash memory), or any combination thereof. The storage device 830 may be a removable or non-removable medium, and may include a machine-readable medium such as a flash drive, a disk, or any other medium, which may be used to store information and/or data and may be accessed within the electronic device 800.

The electronic device 800 may further include additional removable/non-removable, volatile/non-volatile storage media. Although not shown in FIG. 8, a disk drive for reading from or writing into a removable, non-volatile disk (such as a "floppy disk"), and an optical disk drive for reading from or writing into a removable, non-volatile optical disk may be provided. In these cases, each drive may be connected to a bus (not shown) by one or more data medium interfaces. The memory 820 may include a computer program product 825 having one or more program modules configured to perform various methods or actions of various embodiments of the present disclosure.

The communication unit 840 enables communication with other electronic devices through a communication medium. Additionally, the functions of the components of the electronic device 800 may be implemented by a single computing cluster or multiple computing machines, which may communicate through communication connections. Therefore, the electronic device 800 may use a logical connection with one or more other servers, a network personal computer (PC) or another network node to operate in a networked environment.

The input device 850 may be one or more input devices, such as a mouse, a keyboard, a tracking ball, etc. The output device 860 may be one or more output devices, such as a display, a speaker, a printer, etc. The electronic device 800 may further communicate with one or more external devices (not shown) through the communication unit 840 as needed, the external device such as a storage device, a display device, etc., communicates with one or more devices that enable the user to interact with the electronic device 800, or communicates with any devices (e.g., a network card, a modem, etc.) that enable the electronic device 800 to communicate with one or more other electronic devices. Such communication may be performed via input/output (I/O) interfaces (not shown).

According to an example implementation of the present disclosure, there is provided a computer-readable storage medium having computer executable instructions stored thereon, where the computer executable instructions are executed by a processor to implement the method described above. According to an example implementation of the present disclosure, there is further provided a computer program product tangibly stored on a non-transitory computer-readable medium and including computer executable instructions, the computer executable instructions being executed by a processor to implement the method described above.

Various aspects of the present disclosure are described herein with reference to the flowcharts and/or block diagrams of the methods, the apparatuses, the devices, and the computer program products implemented according to the present disclosure. It would be appreciated that each block of the flowchart(s) and/or block diagram(s), and combinations of blocks in the flowchart(s) and/or block diagram(s), may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, create means for performing the functions/actions specified in one or more blocks of the flowchart(s) and/or block diagram(s). These computer-readable program instructions may also be stored in a computer-readable storage medium, these instructions cause a computer, a programmable data processing apparatus, and/or other devices to work in a particular manner, and thus, the computer-readable medium storing the instructions includes an article of manufacture, which includes instructions for implementing various aspects of the functions/actions specified in one or more blocks of the flowchart(s) and/or block diagram(s).

The computer-readable program instructions may be loaded onto a computer, another programmable data processing apparatus, or other devices, such that a series of operating steps are performed on the computer, the other programmable data processing apparatus, or the other devices to generate a computer-implemented procedure, so that the instructions executed on the computer, the other programmable data processing apparatus, or the other devices implement the functions/actions specified in one or more blocks of the flowchart(s) and/or block diagram(s).

The flowcharts and block diagrams in the drawings show the possibly implemented architectures, functions, and operations of the systems, the methods, and the computer program products according to multiple implementations of the present disclosure. In this regard, each block in the flowchart(s) or block diagram(s) may represent a module, a program segment, or a portion of instructions, and the module, the program segment, or the portion of instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram(s) and/or the flowchart(s), and a combination of the blocks in the block diagram(s) and/or the flowchart(s) may be implemented by a special-purpose hardware-based system that perform specified functions or actions, or may be implemented by a combination of special-purpose hardware and computer instructions.

Various implementations of the present disclosure have been described above, and the above description is illustrative, non-exhaustive, and not limited to the disclosed implementations. Without departing from the scope and spirit of the illustrated implementations, many modifications and changes will be apparent to those of ordinary skill in the art. The choice of terms used herein is intended to best explain the principles of the implementations, the practical applications or improvements to the technology in the market, or to enable other ordinary skilled in the art to understand the implementations disclosed herein.

## Claims

1. A method of interaction, comprising:
displaying, in an input field, a plurality of interactive elements input by a user;
providing at least one candidate interactive element, the at least one candidate interactive element being determined based on a set of interactive elements of the plurality of interactive elements, and the set of interactive elements comprising at least an expression element; and
replacing, based on a selection of a target interactive element from the at least one candidate interactive element, the set of interactive elements of the plurality of interactive elements with the target interactive element.

2. The method of claim 1, wherein the set of interactive elements comprises at least one of the following:
a first set of interactive elements determined based on a display sequence of the plurality of interactive elements;
a second set of interactive elements determined, among the plurality of interactive elements, as capable of being combined to generate a fused interactive element;
a third set of interactive elements indicated by a user operation.

3. The method of claim 1, wherein the at least one candidate interactive element is generated based on:
providing the set of interactive elements to a model; and
obtaining a combined interactive element generated by the model based on the set of interactive elements, as the candidate interactive element.

4. The method of claim 3, wherein the model generates the combined interactive element based on visual information and/or semantic information of the set of interactive elements.

5. The method of claim 1, wherein the at least one candidate interactive element is a first set of candidate interactive elements, and the method further comprises:
providing a second set of candidate interactive elements in response to the target interactive element being combinable with at least one further interactive element of the plurality of interactive elements after replacing, the second set of candidate interactive elements being generated based on the target interactive element and the at least one further interactive element.

6. The method of claim 1, further comprising:
sending a message generated based on the target interactive element.

7. The method of claim 6, wherein sending the message generated based on the target interactive element comprises:
sending, in a live streaming interface, a comment message generated based on the target interactive element.

8. The method of claim 7, wherein the message is displayed at a client of a target user, and the client is configured to:
present target information based on a predetermined operation of the target user on the target interactive element in the message, the target information indicating that the target interactive element is determined based on the set of interactive elements.

9. The method of claim 8, wherein the client is further configured to:
present a first sending entry; and
input the target interactive element in an input component of the client based on a selection of the first sending entry.

10. The method of claim 1, further comprising:
updating a historical interactive element list based on the selection of the target interactive element, the historical interactive element list comprising at least one historical fused interactive element used by a current user, wherein the at least one historical fused interactive element is determined based on a plurality of corresponding interactive elements.

11. The method of claim 10, further comprising:
displaying the historical interactive element list in an interactive element panel.

12. The method of claim 10, further comprising:
inputting, based on a selection of a target fused interactive element from the at least one historical fused interactive element, the target fused interactive element into the input field.

13. A method of interaction, comprising:
presenting an editing window based on a first selection of a first interactive element;
presenting the selected first interactive element in the editing window; and
presenting a fused interactive element in the editing window based on a second selection of at least one second interactive element, the fused interactive element being determined based on the first interactive element and the at least one second interactive element.

14. The method of claim 13, further comprising:
inputting the fused interactive element into a target component or sending the fused interactive element based on a selection of a second sending entry in the editing window.

15. The method of claim 13, wherein presenting the selected first interactive element in the editing window comprises:
presenting the selected first interactive element in the editing window in response to the first interactive element being moved from a first position into the editing window.

16. The method of claim 13, wherein the second selection comprises:
moving the at least one second interactive element from a second position into the editing window, to enable the editing window to display the first interactive element and the at least one second interactive element.

17. The method of claim 13, wherein the first interactive element, the second interactive element, or the fused interactive element comprises at least one of the following:
an expression element, a character element, an image element, an audio element.

18. An apparatus for interaction for interaction, comprising:
a displaying module configured to display, in an input field, a plurality of interactive elements input by a user;
a providing module configured to provide at least one candidate interactive element, the at least one candidate interactive element being determined based on a set of interactive elements of the plurality of interactive elements, and the set of interactive elements comprising at least an expression element; and
a replacing module configured to replace, based on a selection of a target interactive element from the at least one candidate interactive element, the set of interactive elements of the plurality of interactive elements with the target interactive element.

19. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 12 or 13 to 17.

20. A computer-readable storage medium having a computer program stored thereon, the computer program being executable by a processor to implement the method of any of claims 1 to 12 or 13 to 17.
